# EUROPÄISCHE PATENTSCHRIFT

(11) **EP 2 898 649 B1**
(45) Veröffentlichungstag und Bekanntmachung des Hinweises auf die Patenterteilung: **26.12.2018**
(21) Anmeldenummer: 13766512.1
(22) Anmeldetag: 20.09.2013
(51) Int. Cl.: H04L 29/06, H04L 29/08, G08B 13/196

(54) **ÜBERWACHUNGSSYSTEM MIT NACHRICHTENWEITERLEITUNG, VERFAHREN SOWIE COMPUTERPROGRAMM**
MONITORING SYSTEM WITH MESSAGE FORWARDING, A METHOD, AND A COMPUTER PROGRAM
SYSTÈME DE SURVEILLANCE AVEC TRANSFERT DE MESSAGES, PROCÉDÉ ET PROGRAMME D'ORDINATEUR

(30) Priorität: 24.09.2012 DE 102012217136
(43) Veröffentlichungstag der Anmeldung: 29.07.2015
(73) Patentinhaber: Robert Bosch GmbH, 70442 Stuttgart (DE)
(72) Erfinder: BAUEREISS, Rainer, 91083 Baiersdorf (DE); RUESS, Kilian, 85521 Riemerling (DE)
(86) Internationale Anmeldenummer: PCT/EP2013/069631
(87) Internationale Veröffentlichungsnummer: WO 2014/044826

(56) Entgegenhaltungen:
- US-A1- 2006 173 997
- US-A1- 2006 271 695
- US-A1- 2009 070 477

## Beschreibung

### Stand der Technik

Die Erfindung betrifft ein Überwachungssystem mit den Merkmalen des Oberbegriffs des Anspruchs 1. Die Erfindung betrifft auch ein Verfahren mit dem Überwachungssystem sowie ein Computerprogramm für das Überwachungssystem.

Überwachungsanlagen für Gebäude, Gebäudekomplexe, Freiflächen oder andere Überwachungsbereiche können eine Vielzahl von Systemkomponenten aufweisen. So können diese Systemkomponenten beispielsweise als Türöffner, Türschließer, Durchgangskreuze, Überwachungskameras, Brandmelder etc. ausgebildet sein. Es ist üblich, dass die Systemkomponenten über ein Netzwerk miteinander verbunden sind, um Signale und Datenströme als Informationen austauschen zu können. Für einen derartigen Informationsaustausch ist es notwendig, dass dem Informationssender und dem Informationsempfänger jeweils die Netzwerkadresse des anderen bekannt ist.

Die Druckschrift US 2009/070477 A1 offenbart ein integriertes Sicherheitssystem, welches gemäß mindestens einer Ausführungsform ein Home LAN Netzwerk mit einem WAN Netzwerk über ein Breitband Modem verbindet.

Die Druckschrift US 2006/271695 A1 offenbart ebenfalls ein Sicherheitssystem, wobei das Sicherheitssystem einen Anwendungsserver aufweist, wobei der Anwendungsserver Daten zwischen Anwendern und Überwachungsgeräten austauscht.

Die Druckschrift US 2006/173997 A1 offenbart ein Monitoring System, wobei eine Kommunikation zwischen einer Monitoreinheit und einem Kontrollserver etabliert wird.

### Offenbarung der Erfindung

Im Rahmen der Erfindung wird ein Überwachungssystem mit den Merkmalen des Anspruchs 1, ein Verfahren mit den Merkmalen des Anspruchs 9 sowie ein Computerprogramm mit den Merkmalen des Anspruchs 10 vorgeschlagen. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird ein Überwachungssystem - auch Überwachungsanlage zu nennen vorschlagen, welche geeignet und/oder ausgebildet ist, eine Überwachung in mindestens einem Überwachungsbereich insbesondere hinsichtlich eines Einbruchs, eines Alarms oder anderer Kriterien durchzuführen.

Das Überwachungssystem umfasst mindestens ein lokales Überwachungsnetzwerk für ein Überwachungsobjekt - oder im betriebsbereiten Zustand - in dem Überwachungsobjekt. Unter einem Überwachungsobjekt wird vorzugsweise ein inhaltlich zusammengehöriger Überwachungsbereich verstanden. Insbesondere ist das Überwachungsobjekt als ein zusammengehöriger Gebäudekomplex, wie z.B. eine Krankenhausanlage, eine Flughafenanlage, ein öffentliches oder privates Gebäude etc. ausgebildet. In dem Überwachungsobjekt ist das lokale Überwachungsnetzwerk installierbar oder installiert. Das Überwachungsnetzwerk bildet ein erstes Netzwerk. Bei dem lokalen Überwachungsnetzwerk handelt es sich insbesondere um ein Netzwerk, bei dem die Netzwerkteilnehmer lokale Adressen, insbesondere lokale IP-Adressen, haben. Im speziellen ist es ein Datennetzwerk, welches auf Basis des TCP-IP-Protokolls arbeitet. Z.B. handelt es sich um ein Ethernet-Netzwerk.

Das mindestens eine lokale Überwachungsnetzwerk weist mindestens ein Endgerät als einen Netzwerkteilnehmer auf. Optional ergänzend umfasst das lokale Überwachungsnetzwerk weitere Endgeräte. Das Endgerät - auch Edge-Gerät genannt - ist für eine Integration in das lokale Überwachungsnetzwerk geeignet und/oder ausgebildet. Insbesondere bildet das Endgerät eine Schnittstelle zwischen dem lokalen Überwachungsnetzwerk und dem Überwachungsbereich.

Das Endgerät weist mindestens eine Funktionseinrichtung auf, wobei die Funktionseinrichtung als eine Sensor- und/oder Aktoreinrichtung ausgebildet ist. Die Funktionseinrichtung kann beispielsweise als ein automatischer oder manueller Brandmelder, als ein Temperatursensor, als ein Objektsensor, wie z.B. eine Lichtschranke, als ein Türöffner, als ein Drehkreuzöffner etc. ausgebildet sein.

Das Endgerät umfasst eine Steuerungseinrichtung, wobei die Steuerungseinrichtung als eine digitale Datenverarbeitungseinrichtung ausgebildet ist. Insbesondere ist die digitale Datenverarbeitungseinrichtung als ein Computer mit einem Betriebssystem realisiert.

Das Endgerät umfasst mindestens eine Netzwerkschnittstelle, welche eine Kopplung der Steuerungseinrichtung bzw. des Endgeräts mit dem lokalen Überwachungsnetzwerk erlaubt. Die Netzwerkschnittstelle und/oder die Steuerungseinrichtung erlauben es, dass Daten von der Funktionseinrichtung in das Überwachungsnetzwerk und/oder Daten von dem Überwachungsnetzwerk in die Funktionseinrichtung übertragbar sind. Somit ist es beispielsweise möglich, Sensordaten der Sensoreinrichtung in das Überwachungsnetzwerk zu übertragen oder Befehlsdaten von dem Überwachungsnetzwerk in die Aktoreinrichtung zu übermitteln. Es ist beispielsweise auch möglich, dass eine bidirektionale Kommunikation zur Konfiguration der Funktionseinrichtung über die Netzwerkschnittstelle erfolgt.

Bei einer bevorzugten Ausgestaltung der Erfindung ist das Endgerät als eine Überwachungskamera, insbesondere als eine digitale Überwachungskamera, ausgebildet. In dieser Ausgestaltung ist es möglich, dass die Überwachungskamera auch als eine so genannte PTZ-Kamera (Pan-Tilt-Zoom-Kamera) realisiert ist, welche gesteuert die Blickrichtung und den Bildausschnitt verändern kann. In diesem Fall kann über das Netzwerk z.B. Konfigurationsdaten, Steuerdaten und/oder Kamerabilder als Daten übertragen werden.

Das Überwachungssystem umfasst ein zweites Netzwerk und eine vorzugsweise zentrale Sicherheitssteuerungseinrichtung, insbesondere als einen Server oder als eine Serverfarm, wobei das lokale Überwachungsnetzwerk über das zweite Netzwerk mit der Sicherheitssteuerungseinrichtung datentechnisch verbunden oder verbindbar ist. Das zweite Netzwerk kann beispielsweise als ein öffentliches Internet ausgebildet sein; bei abgewandelten Ausführungsformen kann das erste Netzwerk auch als eine Telefonverbindung oder als eine andere Datenverbindung realisiert sein. Besonders bevorzugt ist das erste Netzwerk als ein privates Netzwerk ausgebildet, welches von einem ISP (Internet Service Provider) bereitgestellt wird.

Das Endgerät kann sich aus dem lokalen Überwachungsnetzwerk über das zweite Netzwerk mit der Sicherheitssteuerungseinrichtung zur Etablierung einer Clientverbindung datentechnisch verbinden. Durch diese Clientverbindung wird umgesetzt, dass erste Servernachrichten von der Sicherheitssteuerungseinrichtung an eine Endgeräteadresse und somit an das Endgerät und Endgerätnachrichten von dem Endgerät an eine Serveradresse gesendet werden können. Die Serveradresse ist die Netzwerkadresse der Sicherheitssteuerungseinrichtung in dem zweiten Netzwerk, die Endgerätadresse ist die Netzwerkadresse des Endgeräts ebenfalls in dem zweiten Netzwerk.

Das Überwachungssystem umfasst mindestens eine Benutzereinrichtung, welche über das zweite oder ein weiteres Netzwerk mit der Sicherheitssteuerungseinrichtung über eine Benutzerverbindung verbindbar und/oder verbunden ist.

Die Benutzereinrichtung kann beispielsweise als eine Agenteneinrichtung ausgebildet sein. Die Agenteneinrichtung ist vorzugsweise als Arbeitsplatz, insbesondere Computerarbeitsplatz, für Überwachungspersonal als Benutzer ausgebildet. Die Agenteneinrichtung ermöglicht eine Benutzung der Endgeräte, insbesondere eine Steuerung der Endgeräte oder eine Übernahme von Sensordaten von den Endgeräten. Besonders bevorzugt ist in dieser Ausgestaltung das weitere Netzwerk als ein Intranet realisiert, sodass die Agenteneinrichtung, insbesondere in einer Leitstelle des Überwachungssystems, in örtlicher Nähe zu der Sicherheitssteuerungseinrichtung angeordnet ist. Bei einer alternativen Ausführungsform der Erfindung ist die mindestens eine Benutzereinrichtung als ein mobiles Endgerät, insbesondere als ein Mobiltelefon, ausgebildet. Das weitere Netzwerk ist in dieser Ausgestaltung bevorzugt als Telekommunikationsnetzwerk oder Telefonnetzwerk realisiert. Es ist auch möglich, dass die Benutzerverbindung über das zweite Netzwerk, insbesondere über das Internet, verläuft.

Nach der Etablierung der Benutzerverbindung ist es möglich, dass zweite Servernachrichten von der Sicherheitssteuerungseinrichtung an eine Benutzeradresse und Benutzernachrichten von der Benutzereinrichtung an eine oder die Serveradresse gesendet werden können. Die Benutzeradresse ist die Netzwerkadresse in dem zweiten oder weiteren Netzwerk und die Serveradresse ist die Netzwerkadresse in dem zweiten oder weiteren Netzwerk. Für den Fall, dass die Clientverbindung und die Benutzerverbindung gemeinsam über das zweite Netzwerk laufen, können die verwendeten Serveradressen auch identisch sein.

Im Rahmen der Erfindung wird vorgeschlagen, dass die Sicherheitssteuerungseinrichtung einen Gerätemanager aufweist, welcher besonders bevorzugt als ein Softwaremodul ausgebildet ist. Der Gerätemanager ist ausgebildet, die Endgerätenachrichten von dem Endgerät, welche an die Serveradresse und somit an die Sicherheitssteuerungseinrichtung, insbesondere den Gerätemanager, gesendet werden, als erste Servernachrichten an die Benutzeradresse und somit an die Benutzereinrichtung weiterzuleiten. Zudem ist der Gerätemanager ausgebildet, die Benutzernachrichten, welche von der Benutzereinrichtung an die Serveradresse und somit an die Sicherheitssteuerungseinrichtung, insbesondere an den Gerätemanger, gesendet werden, als zweite Servernachrichten an die Endgeräteadresse und somit an das Endgerät weiterzuleiten.

Der Gerätemanager bildet somit eine bidirektionale Kommunikation zwischen der Benutzereinrichtung und dem Endgerät aus. Die bidirektionale Kommunikation ist insbesondere als ein transparenter Kanal ausgebildet, welcher eine virtuelle Direktverbindung zwischen Benutzereinrichtung und Endgerät realisiert. Transparent bedeutet in diesem Zusammenhang insbesondere, dass durch den Gerätemanager grundsätzlich jegliches Kommunikationsprotokoll an das Endgerät weitergeleitet wird. Insbesondere setzt der Gerätemanager eine Umadressierung der Endgerätnachrichten und der Benutzernachrichten um.

Der Vorteil der erfindungsgemäßen Ausgestaltung ist darin zu sehen, dass Benutzereinrichtung und Endgerät die gegenseitige Netzwerkadresse nicht kennen müssen. Stattdessen muss der Benutzereinrichtung bzw. dem Endgerät nur die Serveradresse bekannt sein, um eine Benutzer-Endgerät-Verbindung zu etablieren. Die Benutzer-Endgerät-Verbindung ist insbesondere so ausgebildet, dass wechselseitig alle dem Endgerät oder der Benutzereinrichtung verfügbaren Kommunikationsprotokolle genutzt werden können. Insbesondere werden die Benutzernachrichten und/oder die Endgerätnachrichten von dem Gerätemanager unbearbeitet weitergeleitet. Insbesondere erlaubt die Benutzer-Endgerät-Verbindung mit der Benutzereinrichtung auf einen im Endgerät integrierten Webserver und die damit ausgelieferte Website zuzugreifen, als wäre das Endgerät in dem gleichen lokalen Netzwerk wie die Benutzereinrichtung und für einen Direktzugriff erreichbar.

Weitere Vorteile ergeben sich daraus, dass die Benutzereinrichtungen für die Zusammenarbeit mit dem Endgerät über die Sicherheitssteuerungseinrichtung nicht angepasst werden müssen, sondern über den Gerätemanager mit dem Endgerät kommunizieren können, als wäre das Endgerät in dem gleichen Netzwerk, wie die Benutzereinrichtung und somit lokal installiert. Alle Funktionalitäten des Endgeräts sind folglich auch aus entfernten Netzwerken, insbesondere über Netzwerkgrenzen hinweg, für die Benutzereinrichtung erreichbar.

Bei einer bevorzugten Ausgestaltung der Erfindung weist das Endgerät eine Speichereinrichtung auf, in der die Serveradresse abgelegt ist, wobei das Endgerät ausgebildet ist, bei einer Initialisierung des Endgeräts eine Nachricht an die Serveradresse zu senden, um die Clientverbindung zu initialisieren oder zu etablieren. Die Speichereinrichtung ist besonders bevorzugt als nicht-flüchtiger Speicher ausgebildet. Insbesondere ist die Speichereinrichtung vorkonfiguriert, sodass in der Speichereinrichtung die Serveradresse, z.B. werkseitig abgelegt und damit bekannt ist. Das Endgerät umfasst die Steuerungseinrichtung, welche programmtechnisch und/oder schaltungstechnisch ausgebildet ist, bei einer Initialisierung des Endgeräts über die Netzwerkschnittstelle eine Nachricht an die Serveradresse zu senden.

Somit weist das Endgerät die Funktionalität auf, dass bei einer Initialisierung des Endgeräts die Nachricht vorzugsweise automatisch oder automatisiert von dem Endgerät in das lokale Überwachungsnetzwerk und von dort in das zweite Netzwerk an die Sicherheitssteuerungseinrichtung als Server, insbesondere an den Gerätemanager, gesendet wird, wobei die Serveradresse in dem Endgerät vorkonfiguriert ist. Das Endgerät ist somit programmtechnisch und/oder schaltungstechnisch ausgebildet, bei der Initialisierung aktiv oder proaktiv eine Kommunikation zu der Sicherheitssteuerungseinrichtung, insbesondere zu dem Gerätemanager, an der vorkonfigurierten Serveradresse aufzubauen. Mit der Ausgestaltung des Endgeräts ist es möglich, dass sich das Endgerät selbsttätig, insbesondere ohne Benutzerinteraktion, an der Sicherheitssteuerungseinrichtung, insbesondere an dem Gerätemanager anmeldet. Auf diese Weise wird die Installation des Endgeräts in dem Überwachungssystem deutlich vereinfacht. Das Endgerät ist somit eine technische Lösung für das Problem, dass in einem weit verteilten Netzwerk mit mindestens einem lokalen Subnetz als das Überwachungsnetzwerk und einem Hauptnetzwerk als das zweite Netzwerk besteht, wenn das lokale Subnetz z.B. durch einen Router oder eine andere NAT-Einrichtung von dem Hauptnetzwerk abgeteilt ist. Durch die Trennung (NAT) sind Netzwerkteilnehmer (Clients) in den lokalen Subnetzen für die Anwendung und die Benutzereinrichtungen in dem Hauptnetz als das zweite Netzwerk unsichtbar. Auf herkömmlichem Weg müsste man z.B. den Router des lokalen Subnetzes derart umkonfigurieren, sodass einzelne Ports zu den Clients als Endgeräten in dem lokalen Subnetz sichtbar sind. Allerdings birgt dieses Verfahren Sicherheitsrisiken, da der freigeschaltete Port auch für andere Teilnehmer im Hauptnetzwerk sichtbar ist.

Das Endgerät nutzt dagegen den Vorteil, dass es die Gegenstelle, die Sicherheitssteuerungseinrichtung als Server oder als Backend, schon vorab kennt, da die Serveradresse in der Speichereinrichtung vorkonfiguriert abgelegt ist. Damit handelt es sich bei dem Verbindungsaufbau von dem Endgerät zu der Sicherheitssteuerungseinrichtung um eine Kommunikation vom lokalen Subnetz als das Überwachungsnetzwerk ins Hauptnetz als das zweite Netzwerk und nicht umgekehrt. Herkömmliche Router oder NAT-Einrichtungen erlauben Verbindungen in diese Richtung und müssen nicht aufwendig umparametriert werden. Die Sicherheitssteuerungseinrichtung als Server oder Back-End, insbesondere der Gerätemanager, wiederum kann die aufgebaute Verbindung nutzen, um mit dem Endgerät zu kommunizieren und weitere Anfragen zu stellen, um auf diese Weise die Clientverbindung zu etablieren. Z.B. kann das Endgerät auf diese Weise von der Sicherheitssteuerungseinrichtung parametriert werden und es können Daten, z.B. Videoscreens, angefordert oder übermittelt werden. Die Vorteile der Ausgestaltung des Endgeräts sind, dass weniger Konfigurationsaufwand notwendig ist, da die Überwindung einer NAT-Grenze ohne Routerkonfiguration möglich ist. Das Endgerät erlaubt eine Plug-and-Play-Einrichtung, da das Endgerät in dem lokalen Überwachungsnetzwerk lediglich eine Netzwerkadresse erhalten muss.

Bei einer bevorzugten Weiterbildung der Erfindung ist der Gerätemanager ausgebildet, neben der Clientverbindung eine Ersatzclientverbindung zu etablieren. Diese Ersatzclientverbindung kann genutzt werden, wenn eine andere Benutzereinrichtung eine Kommunikation mit dem gleichen Endgerät fordert. In diesem Fall kann eine erste Benutzer-Endgerät-Verbindung über die Clientverbindung bestehen bleiben und eine zweite Benutzer-Endgerät-Verbindung über die Ersatzclientverbindung aufgebaut werden.

Bei einer möglichen Weiterbildung der Erfindung ist der Gerätemanager ausgebildet, die Clientverbindung und/oder die Ersatzclientverbindung durch ein Ruheprotokoll offenzuhalten. Hierbei werden Nachrichten zwischen dem Gerätemanager und dem Endgerät über die Clientverbindung und/oder die Ersatzclientverbindung ausgetauscht, um eine Verbindungsaktivität zu simulieren und ein Schließen der Clientverbindung und/oder der Ersatzclientverbindung aufgrund einer Zeitüberschreitung (Time Out) zu vermeiden.

Bei einer möglichen Umsetzung der Erfindung weist das Überwachungssystem eine Mehrzahl von Endgeräten in dem Überwachungsnetzwerk auf. Folglich werden über die Sicherheitssteuerungseinrichtung, insbesondere über den Gerätemanager, mehrere Benutzer-Endgerät-Verbindungen aufgebaut. Bei dem Aufbau oder dem Betrieb der Benutzer-Endgerät-Verbindungen muss die Benutzereinrichtung spezifizieren, mit welchem Endgerät die Kommunikation erfolgen soll.

Bei einer TCP/IP Verbindung können Ports verwendet werden, um unterschiedliche Applikation auf dem Server der Sicherheitssteuerungseinrichtung, insbesondere des Gerätemanagers, zu unterscheiden. Somit kann für jede Benutzer-Endgerät-Verbindung ein eigener Port geöffnet werden, so dass die Serveradresse die Schreibweise <IP Adresse>:<Port Nummer> ist, z.B. ist ein erstes Endgerät über 91.13.12.42:91 und ein zweites Endgerät über 91.13.12.42:92 verfügbar, wobei 91.13.12.42 die Netzwerkadresse des Servers mit der Sicherheitssteuerungseinrichtung, insbesondere mit dem Gerätemanager, und 91 bzw. 92 die Portnummer ist. Die Vorteil dieser Ausgestaltung ist es, dass alle Protokolle für die Endgerätenachrichten und die Benutzernachrichten verwendet können, die auf TCP/IP basieren.

Um die Anzahl der geöffneten Ports zu reduzieren, ist es erfindungsgemäß, dass mehreren Benutzer-Endgerät-Verbindung ein gemeinsamer Port zugewiesen wird, wobei die Endgeräte über ein höherwertigeres Protokoll, wie z.B. Http, über einen virtuellen Pfad identifiziert werden. In diesem Fall kann ein erstes Endgerät über http :// 91.13.12.42:91/Endgerat1 und ein zweites Endgerät über http :// 91.13.12.42:91/Endgerat2 verfügbar sein. Diese Alternative führt zu einer Verringerung der geöffneten Ports, zumindest die initiale Kommunikation ist auf das gewählte Protokoll begrenzt.

Bei einer weiteren Variante werden Tickets, insbesondere ausgebildet als Cookies vergeben, so dass für jede Benutzer-Endgerät-Verbindung eine Session geöffnet wird, um die Zuordnung der Benutzereinrichtung zu dem gewählten Endgerät zu steuern.

Ein weiterer Gegenstand der Erfindung betrifft ein Verfahren zur Kommunikation in dem Überwachungssystem nach einem der vorhergehenden Ansprüche bzw. wie dieses zuvor beschrieben wurde, wobei der Gerätemanager die Endgerätnachrichten von dem Endgerät als erste Servernachrichten an die Benutzeradresse und die Benutzernachrichten von der Benutzereinrichtung als zweite Servernachrichten an die Endgerätadresse weiterleitet und dadurch eine Benutzer-Endgerät-Verbindung zwischen dem Endgerät und der Benutzereinrichtung etabliert.

Ein letzter Gegenstand der Erfindung betrifft ein Computerprogramm, welcher Programmcode-Mittel aufweist, um alle Schritte des zuvor beschriebenen Verfahrens umzusetzen, wenn dieses auf einem Computer, insbesondere auf dem Server mit der Sicherheitssteuerungseinrichtung ausgeführt wird..

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 eine schematische Blockdarstellung eines Überwachungssystems als ein Ausführungsbeispiel der Erfindung;
Figur 2 ein Flussdiagramm zur Erläuterung des Verfahrens zur Inbetriebnahme eines Endgeräts in dem Überwachungssystem der Figur 1;
Figur 3 ein schematisches Diagramm zur Erläuterung des Verfahrens der Figur 2 sowie der Etablierung eines transparenten Kanals.

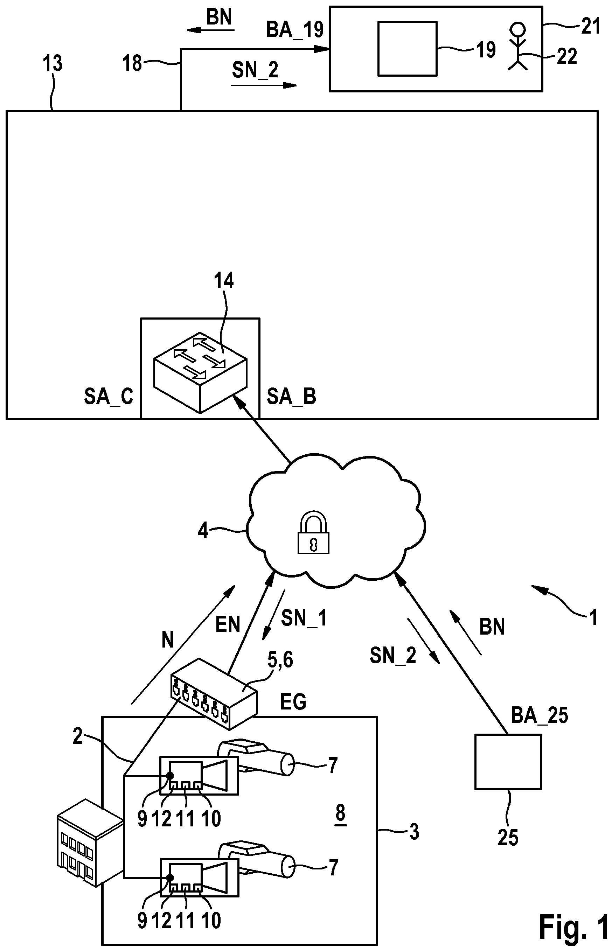

Die Figur 1 zeigt in einem schematischen Blockdiagramm ein Überwachungssystem 1 als ein Ausführungsbeispiel der Erfindung. Das Überwachungssystem 1 umfasst mindestens ein lokales Überwachungsnetzwerk als ein erstes Netzwerk 2. Das erste Netzwerk 2 ist in einem Überwachungsobjekt 3, wie z.B. in einem Gebäude oder Gebäudekomplex, einem Bahnhof, einem Flughafen etc. installiert.

Das erste Netzwerk 2 ist als ein lokales Netzwerk ausgebildet und definiert eine oder mindestens eine lokale Domäne. Das erste Netzwerk 2 ist z.B. als ein LAN realisiert. Jeder der Netzwerkteilnehmer in dem ersten Netzwerk 2 weist eine lokale IP-Adresse auf.

Das erste Netzwerk 2 weist als eine Schnittstelle zu einem zweiten Netzwerk 4 einen Router 5 auf, welcher eine NAT-Einrichtung 6 umfasst. Die NAT-Einrichtung 6 ist ausgebildet, Netzwerkadressen zwischen dem ersten Netzwerk 2 und dem zweiten Netzwerk 4 zu übersetzen. Insbesondere handelt es sich bei dem ersten Netzwerk 2 um ein ausschließlich privates Netzwerk und bei dem zweiten Netzwerk 4 um das Internet oder ein Tier-3- oder Tier-2- oder Tier-1-Netzwerk.

In dem ersten Netzwerk 2 ist mindestens ein Endgerät 7 mit einer Funktionseinrichtung 12 angeordnet. In der dargestellten Ausbildung des Endgeräts 7 als Überwachungskamera umfasst dieses eine Kameraeinrichtung als die Funktionseinrichtung 12, welche ausgebildet ist, einen Überwachungsbereich 8 in dem Überwachungsobjekt 3 zu überwachen. Die Endgeräte 7 weisen jeweils eine Netzwerkschnittstelle 9 auf, über die die Endgeräte 7 in dem ersten Netzwerk 2 kommunizieren können. Die Endgeräte 7 sind als intelligente Endgeräte 7 ausgebildet, welche jeweils eine Steuerungseinrichtung 10 sowie eine lokale Speichereinrichtung 11 umfassen.

Das zweite Netzwerk 4 basiert auf dem Internetprotokoll und kann bei einer ersten Ausführungsalternative als ein öffentliches Internet ausgebildet sein. Alternativ hierzu ist das zweite Netzwerk 4 als ein privates IP-Netz ausgebildet, wobei sämtliche Schnittstellen des zweiten Netzwerks 4 dem privaten IP-Netz exklusiv zugeordnet sind und das private IP-Netz insbesondere von dem öffentlichen Internet datentechnisch getrennt ist. Alternativ kann das andere Netzwerk 4 auch als ein LAN (Local Area Network) oder als ein WAN (Wide Area Network) ausgebildet sein. Insbesondere setzt das zweite Netzwerk 4 eine TCP/IP-Verbindung um.

Das Überwachungssystem 1 umfasst eine insbesondere zentrale oder globale Sicherheitssteuerungseinrichtung, welche als ein Server 13 ausgebildet ist. Der Server 13 ist über eine Schnittstelle mit dem zweiten Netzwerk 4 und somit mittelbar mit dem ersten Netzwerk 2 datentechnisch verbunden.

Im Betrieb des Überwachungssystems 1 können Überwachungsdaten der Endgeräte 7 von dem ersten Netzwerk 2 über den Router 5 bzw. die NAT-Einrichtung 6 an den als Sicherheitssteuerungseinrichtung ausgebildeten Server 13 weitergeleitet werden. Der Server 13 kann nachfolgend - abhängig von seiner Ausbildung - die Überwachungsdaten auswerten und automatisiert einen Alarm auslösen oder die Überwachungsdaten an ein Überwachungspersonal 22 weiterleiten. In Gegenrichtung kann der Server 13 Konfigurationsdaten oder Datenabfragen über das zweite Netzwerk 4, den Router/die NAT-Einrichtung 5/6 an die Endgeräte 7 übermitteln. Sind die Endgeräte 7 als Überwachungskameras ausgebildet, so werden in Richtung des Servers 13 Bilder des Überwachungsbereichs 8 übertragen.

Ausgebildet als intelligente Überwachungskameras können die Endgeräte 7 auch autarke Auswertungen der Überwachungsdaten mit der Steuerungseinrichtung 10 durchführen. In dem ersten Netzwerk 2 können auch andersartige Endgeräte 7, wie z.B. Türöffner, Brandmelder etc. alternativ oder ergänzend zu den Überwachungskameras integriert sein.

Den Endgeräten 7 sind in dem ersten Netzwerk 2 jeweils lokale IP-Adressen als Client-Adressen zugeordnet. Dem Server 13 ist in dem zweiten Netzwerk 4 eine IP-Adresse als Server-Adresse zugeordnet. Es kann optional vorgesehen sein, dass der Server 13 wiederum in einem lokalen Netzwerk angeordnet ist, wobei der Server trotzdem über die Server-Adresse über das zweiten Netzwerk 4 erreichbar ist.

Bei der Installation der Endgeräte 7 stellt sich nun das Problem, dass die Endgeräte 7 in dem ersten Netzwerk 2 datentechnisch betrachtet für den Server 13 "unsichtbar" sind, da diese hinter der NAT-Einrichtung 6 angeordnet sind.

Um anwenderfreundlich eine Kommunikation zwischen Server 13 und Endgeräten 7 zu etablieren, weisen die Endgeräte 7 jeweils eine Socket-Knocker-Senderfunktionalität und der Server 13 eine Socket-Knocker-Empfängerfunktionalität auf. Zur Umsetzung ist in der Speichereinrichtung 11 des Endgeräts 7 die Server-Adresse des Servers 13 fest hinterlegt. Dies kann beispielsweise über eine Vorkonfiguration der Endgeräte 7 erfolgen. Ferner ist in der Speichereinrichtung 11 eine eindeutige ID des Endgeräts 7 abgespeichert. Optional ist in der Speichereinrichtung 11 auch ein Zertifikat für eine gegenseitige Authentifizierung von Endgerät 7 und Server 13 abgelegt. Zur Umsetzung der Socket-Knocker-Empfängerfunktionalität weist der Server 13 einen Gerätemanager 14 auf, welcher z.B. als ein Programm oder ein Dienst in dem Server 13 ausgebildet ist.

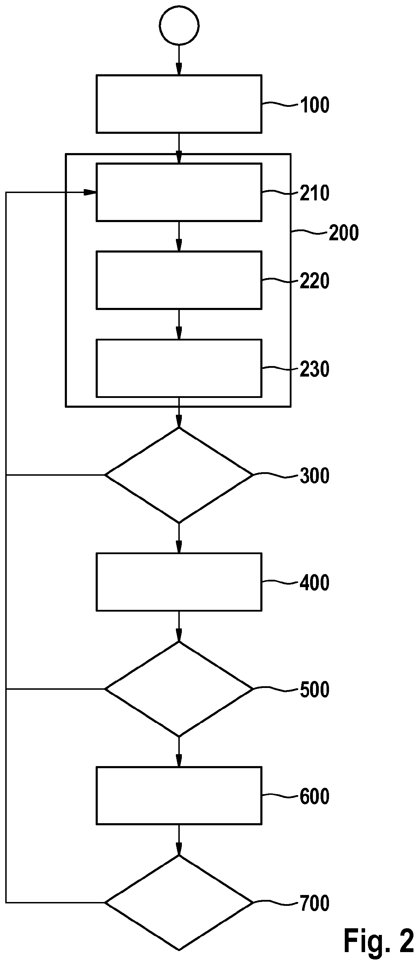

Zur Erläuterung des Verbindungsaufbaus zwischen Endgerät 7 und Gerätemanager 14 wird auf die Figur 2 verwiesen.

In einem Schritt 100 wird das Endgerät 7 eingeschaltet, mit einer Spannungsversorgung verbunden oder mit dem ersten Netzwerk 2 verschaltet, sodass ein Start-Up des Endgeräts 7 abläuft.

In einem Schritt 200 wird eine Nachricht N von dem Endgerät 7 an den Server 13, insbesondere an den Gerätemanager 14, als Knock gesendet. Die Versendung kann durch ein Verbindungsmodul (nicht dargestellt) der Steuereinrichtung 10 umgesetzt werden, welche ebenfalls als ein Programm oder ein Dienst ausgebildet ist. Die Nachricht N umfasst die eindeutige ID des Endgeräts 7.

Durch die Übersendung der Nachricht N an den Server 13 wird in der NAT-Einrichtung 6 eine NAT-Session gestartet, wobei die zugehörigen Verbindungsinformationen, insbesondere die IP-Adressen, Ports und gegebenenfalls Time-outs in einer NAT-Tabelle gespeichert werden. Anhand der gespeicherten Informationen kann die NAT-Einrichtung 6 ein Antwort-Datenpaket von dem Gerätemanager 14 bzw. dem Server 13 dem jeweiligen Endgerät 7 korrekt zuordnen. Durch das Absenden der Nachricht N an den Server 13 wird somit eine bidirektionale Verbindung eingeleitet.

Erhält der Server 13, insbesondere der Gerätemanager 14, die Nachricht N, fügt der Gerätemanager 14 das Endgerät 7 anhand der eindeutigen ID zu einer Geräteliste hinzu, die er dem Server 13 zur Verfügung stellt. Weiterhin initiiert der Gerätemanager 14 einen SSL-Handshake mit dem Endgerät 7.

In einem Schritt 300 wartet das Endgerät 7, ob es ein Antwort-Datenpaket von dem Gerätemanager 14 erhält. Ist dies nicht der Fall, wird das Absenden der Nachricht N wiederholt. Ist dies der Fall, wird der SSL-Handshake angenommen und in einem Schritt 400 eine sichere Verbindung zu dem Gerätemanager 14 und damit zu dem Server 13 etabliert.

Zur Sicherheit wird in einem Schritt 500 geprüft, ob das Zertifikat des Gerätemanagers 14 mit dem in der Speichereinrichtung 11 hinterlegten Zertifikat übereinstimmt.

In einem Schritt 600 wird die etablierte Verbindung offengehalten, um eingehende Anfragen des Gerätemanagers 14 oder des Servers 13 erhalten zu können. Für den Fall, dass die Verbindung verlorengeht oder ein Time-out in einem Schritt 700 erfolgt, wird die Prozedur neu gestartet.

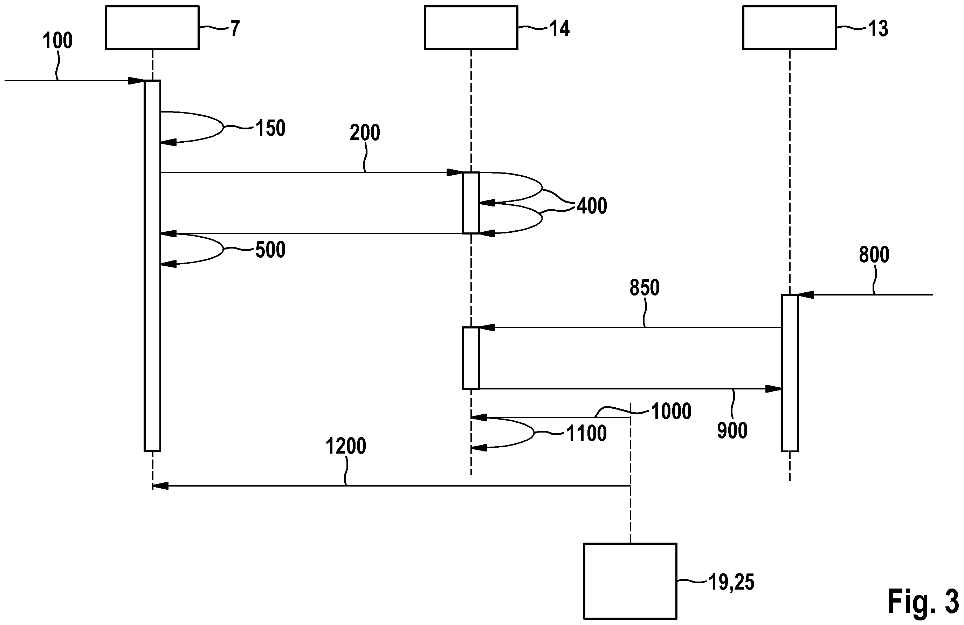

Die Zuweisung der Client-Adresse in dem ersten Netzwerk 2 kann zum einen manuell erfolgen, es ist jedoch einfacher, dass das Endgerät 7 die Client-Adresse automatisch über eine DHCP-Funktionalität in einem Schritt 150 (Figur 3) erhält. In der Figur 3 ist das Verfahren nochmals in einer anderen Darstellung gezeigt:
In dem Schritt 100 wird das Endgerät 7 eingeschaltet. In dem Schritt 150 erhält das Endgerät 7 über DHCP die Clientadresse. In dem Schritt 200 wird die Nachricht N an den Gerätemanager 14 übermittelt. In dem Schritt 400 wird das Endgerät 7 der Geräteliste hinzugefügt und der SSL-Handshake vorbereitet. In dem Schritt 500 wird die Identität des Gerätemanagers 14 durch das Endgerät 7 validiert. Optional ist es möglich, dass in einem Schritt 800 von extern abgefragt wird, ob dem Server 13 oder dem Gerätemanager 14 neue Endgeräte 7 bekannt sind. In diesem Fall wird in einem Schritt 850 von dem Server 13 eine Anfrage an den Gerätemanager 14 nach neuen Geräten gerichtet und in einem Schritt 900 die Geräteliste mit den Endgeräten 7 an den Server 13 übermittelt.

Optional kann vorgesehen sein, dass das Absenden der Nachricht N wiederholt wird, wenn in dem Schritt 300 festgestellt wurde, dass keine Antwort von dem Gerätemanager 14 oder dem Server 13 eingegangen ist und somit der Knock nicht erfolgreich war. In diesem Fall wird in einem Schritt 210 die zeitliche Länge eines Sendeintervalls bestimmt. In einem Schritt 220 wird die zeitliche Länge des Knock-Intervalls abgewartet und in einem Schritt 230 die Nachricht N nochmals gesendet.

Wie sich wieder aus der Darstellung der Figur 1 ergibt, ist der als Sicherheitssteuerungseinrichtung ausgebildete Server 13 über ein weiteres Netzwerk 18 mit einer oder mehreren Agenteneinrichtungen 19 datentechnisch verbunden. Das weitere Netzwerk 18 kann dem zweiten Netzwerk 4 entsprechen. Alternativ ist es möglich, dass das weitere Netzwerk 18 als ein Intranet oder als eine andere Variante des zweiten Netzwerks 4 ausgebildet ist. Es kann jedoch auch als privates IP-Netzwerk ausgebildet sein. Die Agenteneinrichtung 19 bildet in ihrer Gesamtheit eine Leitstelle 21 bzw. ein Monitoring Center. In der Leitstelle 21 sind meist eine Mehrzahl derartiger Agenteneinrichtungen 19 angeordnet, sodass die Leitstelle 21 in Abhängigkeit von der Anzahl und der Größe der Überwachungsobjekte 3 skaliert werden kann. Die Agenteneinrichtungen 19 sind insbesondere als Arbeitsplätze für das Überwachungspersonal 22 ausgebildet. Die Agenteneinrichtungen 19 empfangen Mitteilungen, insbesondere Alarmmitteilungen oder andere Mitteilungen, die von den Endgeräten 7 gesendet wurden, sodass diese von dem Überwachungspersonal 22 bearbeitet werden können.

Der als Sicherheitssteuerungseinrichtung ausgebildete Server 13 ist über das zweite Netzwerk 4 oder ein weiteres Netzwerk mit mindestens einer Clienteinrichtung 25 verbunden. Die Clienteinrichtung 25 ist als ein mobiles Endgerät, insbesondere als ein Handy oder Smartphones ausgebildet. Die Clienteinrichtungen 25 sind beispielsweise mobilem Überwachungspersonal 22 oder anderen Beteiligten des Überwachungssystems 1 zugeordnet.

Die Agenteneinrichtungen 19 und die Clienteinrichtungen 25 bilden Benutzereinrichtungen in dem Überwachungssystem 1.

Im Betrieb des Überwachungssystems 1 ist es erforderlich, dass die Benutzereinrichtungen, also die Agenteneinrichtungen 19 und/oder Clienteinrichtungen 25, mit den Endgeräten 7 kommunizieren, um beispielsweise Sensordaten, insbesondere Bilddaten abzufragen, Einstellungen zu ändern, Befehle zu übertragen etc. Für eine unmittelbare Kommunikation zwischen der Benutzereinrichtung 19,25 und den Endgeräten 7 müssten jedoch wechselseitig die Netzwerkadressen bekannt sein. Nachdem die Endgeräte 7 hinter der NAT-Einrichtung 6 angeordnet sind, müssten der Router 5 oder die NAT-Einrichtung 6 die eigene Netzwerkadresse sowie einer Portinformation zur Verfügung stellen, sodass die Benutzereinrichtungen 19,25 unmittelbar mit den Endgeräten 7 kommunizieren können. Dies ist jedoch aus sicherheitstechnischen Gründen oftmals nicht gewünscht.

Vor diesem Hintergrund übernimmt der Gerätemanager 14 die Funktion der Etablierung eines transparenten Kanals zwischen der Bedienungseinrichtung 19,25 und dem Endgerät 7.

Genauer betrachtet wird über die zuvor geschilderte Knocking-Funktion eine Clientverbindung zwischen dem Endgerät 7 und dem Gerätemanager 14 bzw. dem Server 13 aufgebaut. Der Aufbau der Clientverbindung kann wie zuvor beschrieben oder auf andere Weise erfolgen.

Dem Gerätemanager 14 bzw. dem Server 13 ist eine Serveradresse SA_C zugeordnet, an die das Endgerät 7 Endgerätnachrichten EN senden kann. Dem Endgerät 7 ist dagegen eine Endgerätadresse EG zugeordnet, welche in dem gezeigten Überwachungssystem 1 durch die Netzwerkadresse der NAT-Einrichtung und einer Portinformation gebildet ist. Der Gerätemanager 14 bzw. der Server 13 nutzen die Endgerätadresse EG, um erste Servernachrichten SN1 an das Endgerät 7 zu senden.

Die Benutzereinrichtungen 25,19 weisen jeweils eine Benutzereinrichtungsadresse BA_25, BA_19 auf und kommunizieren über eine Benutzerverbindung mit dem Gerätemanager 14 bzw. dem Server 13, wobei sie eine Serveradresse SA_B nutzen. Die Serveradresse SA_C kann gleich zu der Serveradresse SA_B sein, es kann sich jedoch auch um unterschiedliche Serveradressen handeln. Über die Benutzerverbindungen können Benutzernachrichten BN an den Gerätemanager 14 bzw. zweite Servernachrichten SN_2 an die Benutzereinrichtung 19, 25gesendet werden.

Um einen transparenten Kanal zwischen Benutzereinrichtungen 19, 25 und Endgerät 7 zu etablieren, werden vom Gerätemanager 14 Benutzernachrichten BN, die an ein spezifisches Endgerät 7 gerichtet sind, umadressiert und als Servernachrichten SN1 an die Endgerätadresse EG und somit an das spezifizierte Endgerät 7 weitergeleitet. In Gegenrichtung werden Endgerätnachrichten EN, die an eine Benutzereinrichtung 19 oder 25 ausgeliefert werden sollen, von dem Gerätemanager 14 umadressiert, sodass diese als Servernachrichten SN_2 an die Benutzereinrichtungen 19,25 weitergeleitet werden. Durch dieses Vorgehen muss keine weitere Verbindung zwischen der Benutzereinrichtung 19,25 und dem Endgerät 7 neben der bereits existierenden Clientverbindung zwischen Endgerät 7 und Gerätemanager 14 etabliert werden.

Allerdings kann es sich als vorteilhaft erweisen, wenn bei der Etablierung eines transparenten Kanals zwischen einer Benutzereinrichtung 19,25 und dem Endgerät 7 bereits vorausschauend eine zweite Clientverbindung zwischen Gerätemanager 14 und Endgerät 7 geschaffen wird, um gegebenenfalls ankommende, parallele Anfragen von anderen Benutzereinrichtungen 19, 25 bearbeiten zu können.

In der Figur 3 ist die Etablierung des transparenten Kanals dargestellt: In einem Schritt 1000 erfolgt eine Verbindungsanfrage der Benutzereinrichtung 19, 25 an den Gerätemanager 14. Der Gerätemanager 14 verarbeitet die Verbindungsanfrage und verbindet in einem Schritt 1100 die Client-Verbindung mit der Benutzer-Verbindung zu der Endgerät-Benutzer-Verbindung. In einem Schritt 1200 ist die Endgerät-Benutzer-Verbindung etabliert, so dass eine bidirektionale Kommunikation zwischen der Benutzereinrichtung 19, 25 und dem Endgerät erfolgen kann.

Zur Umsetzung der Benutzer-Verbindung zwischen der Benutzereinrichtung 19, 25 und dem Gerätemanager 14 können verschieden Wege gewählt werden, um die Zuordnung zwischen Benutzereinrichtung 19, 25 und dem Endgerät 7 auch bei einer Vielzahl von Endgerät-Benutzer-Verbindung eindeutig regeln zu können. Zum einen ist es möglich, dass den Benutzereinrichtungen 19, 25 in Abhängigkeit des gewünschten Endgeräts 7 ein dem Endgerät 7 zugeordneter Port an dem Gerätemanager 14 zugewiesen wird. Zum zweiten ist es möglich, dass einer Mehrzahl von Benutzereinrichtungen 19, 25 der gleiche Port an dem Gerätemanager 14 zugewiesen wird, wobei die Spezifizierung des gewünschten Endgeräts durch Übermittlung einer Zusatzinformation erfolgt. Zum dritten ist es möglich, dass für jede Endgerät-Benutzer-Verbindung ein Ticket erstellt und vergeben wird, wobei sich die Benutzereinrichtungen 19, 25 auf das Ticket beziehen und auf diese Weise mit dem gewünschten Endgerät 7 verbunden werden.

## Patentansprüche

1. Überwachungssystem (1)
mit einem lokalen Überwachungsnetzwerk (2) für ein Überwachungsobjekt (3) als ein erstes Netzwerk, wobei das mindestens eine lokale Überwachungsnetzwerk (2) eine Mehrzahl von Endgeräten aufweist, mit einer Sicherheitssteuerungseinrichtung (13), wobei das lokale Überwachungsnetzwerk (2) über ein zweites Netzwerk (4) mit der Sicherheitssteuerungseinrichtung über eine Clientverbindung datentechnisch verbunden ist, so dass erste Servernachrichten (SN_1) von der Sicherheitssteuerungseinrichtung an eine Endgerätadresse (EG) und Endgerätnachrichten (EN) von dem Endgerät (7) an die Serveradresse (SA_C) gesendet werden, mit mindestens einer Benutzereinrichtung (19, 25), welche über das zweite oder ein weiteres Netzwerk (4,18) mit der Sicherheitssteuerungseinrichtung (13) über eine Benutzerverbindung verbunden ist, so dass zweite Servernachrichten (SN_2) von der Sicherheitssteuerungseinrichtung an eine Benutzeradresse (BA) und Benutzernachrichten (BN) von der Benutzereinrichtung (19,25) an eine oder die Serveradresse (SA_C, SA_B) gesendet werden, wobei die Sicherheitssteuerungseinrichtung einen Gerätemanager (14) aufweist, wobei die Sicherheitssteuerungseinrichtung als ein Server (13) ausgebildet ist, wobei der Server (13) Überwachungsdaten der Endgeräte (7) auswerten und automatisiert einen Alarm auslösen kann, wobei der Gerätemanager (14) ausgebildet ist, die Endgerätnachrichten (EN) von dem Endgerät (7) als erste Servernachrichten (SN_1) an die Benutzeradresse (BA) und die Benutzernachrichten (BN) von der Benutzereinrichtung (19,25) als zweite Servernachrichten (SN_2) an die Endgerätadresse (EG) weiterzuleiten, um eine Benutzer-Endgerät- Verbindung zwischen dem Endgerät (7) und der Benutzereinrichtung (19,25) zu schaffen, wobei die Benutzer-Endgerät-Verbindung erlaubt mit der Benutzereinrichtung (19,25) auf einen im Endgerät (7) integrierten Webserver und die damit ausgelieferte Website zuzugreifen, als wäre das Endgerät (7) in dem gleichen lokalen Netzwerk wie die Benutzereinrichtung (19,25) und für einen Direktzugriff erreichbar, mit der Mehrzahl von Endgeräten (7) in dem Überwachungsnetzwerk (2), **dadurch gekennzeichnet, dass** die Sicherheitssteuerungseinrichtung für eine Mehrzahl von Benutzer-Endgerät-Verbindungen einen gemeinsamen Port für die Benutzereinrichtungen (19,25) in der Serveradresse (SA_B) bereit stellt, wobei die Auswahl des Endgeräts (7) durch einen Zusatz in der Serveradresse (SA_B) erfolgt.

2. Überwachungssystem (1) nach Anspruch 1, **dadurch gekennzeichnet, dass** der Gerätemanager (14) einen bidirektionalen Kommunikationskanal als die Benutzer-Endgerät-Verbindung zwischen dem Endgerät (7) und der Benutzereinrichtung (19,25) ausbildet.

3. Überwachungssystem (1) nach einem der vorhergehenden Ansprüche, **dadurch gekennzeichnet, dass** das Endgerät (7) eine Speichereinrichtung (11) aufweist, in der die Serveradresse (SA_C) abgelegt ist, wobei das Endgerät (7) ausgebildet ist, bei einer Initialisierung des Endgeräts (7) eine Nachricht (N) an die Serveradresse (SA_C) zu senden, um die Clientverbindung zu initialisieren oder zu etablieren.

4. Überwachungssystem (1) nach einem der vorhergehenden Ansprüche, **gekennzeichnet durch** mindestens eine NAT-Einrichtung (6), wobei das Überwachungsnetzwerk (2) und das zweite Netzwerk (4) über die mindestens eine NAT-Einrichtung (6) datentechnisch miteinander verbunden sind und wobei die Clientverbindung von dem Endgerät (7) über die mindestens eine NAT-Einrichtung (6) zu der Sicherheitssteuerungseinrichtung verläuft und/oder die Nachricht (N) von dem Endgerät (7) über die mindestens eine NAT-Einrichtung (6) an die Sicherheitssteuerungseinrichtung gesendet wird.

5. Überwachungssystem (1) nach einem der vorhergehenden Ansprüche, **dadurch gekennzeichnet, dass** der Gerätemanager (14) ausgebildet ist, neben der Clientverbindung eine Ersatzclientverbindung zu etablieren.

6. Überwachungssystem (1) nach einem der vorhergehenden Ansprüche, **dadurch gekennzeichnet, dass** der Gerätemanager (14) ausgebildet ist, die Clientverbindung und/oder die Ersatzclientverbindung durch ein Ruheprotokoll offen zu halten.

7. Überwachungssystem (1) nach einem der vorhergehenden Ansprüche, **gekennzeichnet durch** eine Mehrzahl von Endgeräten (7) in dem Überwachungsnetzwerk (2), wobei der Gerätemanager (14) ausgebildet ist, für Benutzer-Endgerät-Verbindungen einen gemeinsamen Port für die Benutzereinrichtung (19,25) in der Serveradresse (SA_B) bereit zu stellen.

8. Verfahren zur Kommunikation in dem Überwachungssystem (1), wobei das Überwachungssystem (1) nach einem der vorhergehenden Ansprüche ausgebildet ist, wobei der Gerätemanager die Endgerätnachrichten (EN) von dem Endgerät (7) als erste Servernachrichten (SN_1) an die Benutzeradresse (BA) und die Benutzernachrichten (BN) von der Benutzereinrichtung (19,25) als zweite Servernachrichten (SN_2) an die Endgerätadresse (EG) weiterleitet und dadurch eine Benutzer-Endgerät-Verbindung zwischen dem Endgerät (7) und der Benutzereinrichtung (19,25) etabliert, **dadurch gekennzeichnet, dass** die Sicherheitssteuerungseinrichtung für eine Mehrzahl von Benutzer-Endgerät-Verbindungen einen gemeinsamen Port für die Benutzereinrichtungen (19,25) in der Serveradresse (SA_B) bereit stellt, wobei die Auswahl des Endgeräts (7) durch einen Zusatz in der Serveradresse (SA_B) erfolgt).

9. Computerprogramm mit Programmcode-Mitteln, um alle Schritte des Verfahrens nach Anspruch 8 durchzuführen, wenn das Programm auf einem Computer und/oder der Sicherheitssteuerungseinrichtung des Überwachungssystems (1) von jedem Beliebigen der Ansprüche 1 bis 7 ausgeführt wird.

## Claims

1. Monitoring system (1) having a local monitoring network (2) for an object to be monitored (3) as a first network, the at least one local monitoring network (2) having a plurality of terminals, having a safety control device (13), the local monitoring network (2) being connected in terms of data technology to the safety control device via a second network (4) using a client connection, with the result that first server messages (SN_1) are transmitted from the safety control device to a terminal address (EG) and terminal messages (EN) are transmitted from the terminal (7) to the server address (SA_C), having at least one user device (19, 25) which is connected to the safety control device (13) via the second network or a further network (4, 18) using a user connection, with the result that second server messages (SN_2) are transmitted from the safety control device to a user address (BA) and user messages (BN) are transmitted from the user device (19, 25) to a server address or the server address (SA_C, SA_B),
wherein the safety control device has a device manager (14), the safety control device being in the form of a server (13), the server (13) being able to evaluate monitoring data from the terminals (7) and being able to trigger an alarm in an automated manner, the device manager (14) being designed to forward the terminal messages (EN) from the terminal (7) to the user address (BA) as first server messages (SN_1) and to forward the user messages (BN) from the user device (19, 25) to the terminal address (EG) as second server messages (SN_2) in order to create a user/terminal connection between the terminal (7) and the user device (19, 25), the user/terminal connection allowing, with the user device (19,25), access to a web server integrated in the terminal (7) and to the website delivered thereby as if the terminal (7) could be reached in the same local area network as the user device (19,25) and for direct access with the plurality of terminals (7) in the monitoring network (2), **characterized in that** the safety control device provides a common port for the user devices (19,25) in the server address (SA_B) for a plurality of user/terminal connections, the terminal (7) being selected by means of an addendum in the server address (SA_B).

2. Monitoring system (1) according to Claim 1, **characterized in that** the device manager (14) forms a bidirectional communication channel as the user/terminal connection between the terminal (7) and the user device (19, 25).

3. Monitoring system (1) according to one of the preceding claims, **characterized in that** the terminal (7) has a storage device (11) which stores the server address (SA_C), the terminal (7) being designed to transmit a message (N) to the server address (SA_C) during initialization of the terminal (7) in order to initialize or establish the client connection.

4. Monitoring system (1) according to one of the preceding claims, **characterized by** at least one NAT device (6), the monitoring network (2) and the second network (4) being connected to one another in terms of data technology via the at least one NAT device (6), and the client connection running from the terminal (7) to the safety control device via the at least one NAT device (6), and/or the message (N) being transmitted from the terminal (7) to the safety control device via the at least one NAT device (6) .

5. Monitoring system (1) according to one of the preceding claims, **characterized in that** the device manager (14) is designed to establish a substitute client connection in addition to the client connection.

6. Monitoring system (1) according to one of the preceding claims, **characterized in that** the device manager (14) is designed to keep the client connection and/or the substitute client connection open by means of a quiescent protocol.

7. Monitoring system (1) according to one of the preceding claims, **characterized by** a plurality of terminals (7) in the monitoring network (2), the device manager (14) being designed to provide a common port for the user device (19, 25) in the server address (SA_B) for user/terminal connections.

8. Method for communicating in the monitoring system (1), the monitoring system (1) being designed according to one of the preceding claims, the device manager forwarding the terminal messages (EN) from the terminal (7) to the user address (BA) as first server messages (SN_1) and forwarding the user messages (BN) from the user device (19, 25) to the terminal address (EG) as second server messages (SN_2) and thereby establishing a user/terminal connection between the terminal (7) and the user device (19, 25), **characterized in that** the safety control device provides a common port for the user devices (19, 25) in the server address (SA_B) for a plurality of user/terminal connections, the terminal (7) being selected by means of an addendum in the server address (SA_B).

9. Computer program having program code means for carrying out all steps of the method according to Claim 8 when the program is executed on a computer and/or the safety control device of the monitoring system (1) from any of Claims 1 to 7.

## Revendications

1. Système de surveillance (1) comportant un réseau de surveillance local (2) destiné à un objet de surveillance (3) en tant que premier réseau, dans lequel l'au moins un réseau de surveillance local (2) comporte une pluralité de terminaux,
un équipement de commande de sécurité (13), dans lequel le réseau de surveillance local (2) est relié par transmission de données à l'équipement de commande de sécurité par l'intermédiaire d'un second réseau (4) au moyen d'une connexion client, de sorte que des premiers messages de serveur (SN_1) sont envoyés de l'équipement de commande de sécurité à une adresse de terminal (EG) et que des messages de terminaux (EN) sont envoyés du terminal (7) à l'adresse de serveur (SA_C),
au moins un dispositif utilisateur (19, 25) connecté à l'équipement de commande de sécurité (13) par l'intermédiaire du second réseau (4,18) ou d'un autre réseau (4,18), au moyen d'une connexion utilisateur, de sorte que des seconds messages de serveur (SN_2) sont envoyés de l'équipement de commande de sécurité à une adresse d'utilisateur (BA) et que des messages d'utilisateur (BN) sont envoyés de l'équipement utilisateur (19, 25) à une ou à l'adresse de serveur (SA_C, SA_B),
dans lequel l'équipement de commande de sécurité comprend un gestionnaire d'appareils (14), dans lequel l'équipement de commande de sécurité est réalisé sous la forme d'un serveur (13), dans lequel le serveur (13) peut évaluer des données de surveillance des terminaux (7) et déclencher automatiquement une alarme, dans lequel le gestionnaire d'appareils (14) est configuré pour retransmettre les messages de terminaux (EN) en tant que premiers messages de serveur (SN_1) depuis le terminal (7) à l'adresse d'utilisateur (BA) et pour retransmettre les messages d'utilisateur (BN) en tant que seconds messages de serveur (SN_2) depuis l'équipement utilisateur (19, 25) à l'adresse de terminal (EG), afin d'établir une connexion de terminal utilisateur entre le terminal (7) et l'équipement utilisateur (19, 25), dans lequel la connexion de terminal utilisateur permet d'accéder au moyen de l'équipement utilisateur (19, 25) à un serveur web intégré au terminal (7) et par conséquent, au site web livré avec celui-ci comme si le terminal (7) était sur le même réseau local que l'équipement utilisateur (19, 25) afin qu'il puisse être atteint pour un accès direct au moyen de la pluralité de terminaux (7) du réseau de surveillance (2), **caractérisé en ce que** l'équipement de commande de sécurité fournit un port commun destiné aux équipements utilisateurs (19, 25) à l'adresse du serveur (SA_B) pour une pluralité de connexions de terminaux utilisateurs, dans lequel la sélection du terminal (7) s'effectue par un ajout à l'adresse du serveur (SA_B).

2. Système de surveillance (1) selon la revendication 1, **caractérisé en ce que** le gestionnaire d'appareils (14) crée un canal de communication bidirectionnel en tant que connexion entre le terminal (7) et l'équipement utilisateur (19, 25).

3. Système de surveillance (1) selon l'une des revendications précédentes, **caractérisé en ce que** le terminal (7) comporte un dispositif de mémoire (11) dans lequel est stockée l'adresse du serveur (SA_C), dans lequel le terminal (7) est conçu pour envoyer un message (N) à l'adresse du serveur (SA_C) lors d'une initialisation du terminal (7) afin d'initialiser ou d'établir la connexion client.

4. Système de surveillance (1) selon l'une des revendications précédentes, **caractérisé par** au moins un équipement NAT (6), dans lequel le réseau de surveillance (2) et le second réseau (4) sont connectés l'un à l'autre par transmission de données par l'intermédiaire de l'au moins un équipement NAT (6) et dans lequel la connexion client s'étend du terminal (7) à l'équipement de commande de sécurité par l'intermédiaire de l'au moins un équipement NAT (6) et/ou le message (N) est envoyé du terminal (7) à l'équipement de commande de sécurité par l'intermédiaire de l'au moins un équipement NAT (6).

5. Système de surveillance (1) selon l'une des revendications précédentes, **caractérisé en ce que** le gestionnaire d'appareils (14) est conçu pour établir une connexion client de substitution, en plus de la connexion client.

6. Système de surveillance (1) selon l'une des revendications précédentes, **caractérisé en ce que** le gestionnaire d'appareils (14) est conçu pour maintenir ouverte la connexion client et/ou la connexion client de substitution au moyen d'un protocole de veille.

7. Système de surveillance (1) selon l'une des revendications précédentes, **caractérisé par** une pluralité de terminaux (7) dans le réseau de surveillance (2), dans lequel le gestionnaire d'appareils (14) est conçu pour fournir un port commun destiné à l'équipement utilisateur (19, 25) à l'adresse du serveur (SA_B) pour des connexions de terminaux utilisateurs.

8. Procédé de communication dans le système de surveillance (1), dans lequel le système de surveillance (1) est conçu selon l'une des revendications précédentes, dans lequel le gestionnaire d'appareils retransmet les messages de terminaux (EN) en tant que premiers messages de serveur (SN_1) depuis le terminal (7) à l'adresse d'utilisateur (BA) et retransmet les messages d'utilisateur (BN) en tant que seconds messages de serveur (SN_2) depuis l'équipement utilisateur (19, 25) à l'adresse de terminal (EG) et établit ainsi une connexion de terminal utilisateur entre le terminal (7) et l'équipement utilisateur (19, 25),
**caractérisé en ce que** l'équipement de commande de sécurité fournit un port commun destiné aux équipements utilisateurs (19, 25) à l'adresse du serveur (SA_B) pour une pluralité de connexions de terminaux utilisateurs, dans lequel la sélection du terminal (7) s'effectue par un ajout à l'adresse du serveur (SA_B).

9. Programme d'ordinateur comportant des moyens à code de programme permettant de mettre en oeuvre toutes les étapes du procédé selon la revendication 8 lorsque le programme est exécuté sur un ordinateur et/ou sur l'équipement de commande de sécurité du système de surveillance (1) selon l'une quelconque des revendications 1 à 7.
